## Europäisches Patentamt
## European Patent Office
## Office européen des brevets

(19)

(11) Veröffentlichungsnummer: **0 058 331**
**B1**

(12) ## EUROPÄISCHE PATENTSCHRIFT

(45) Veröffentlichungstag der Patentschrift:
**12.06.85**

(21) Anmeldenummer: **82100695.4**

(22) Anmeldetag: **02.02.82**

(51) Int. Cl.⁴: **C 08 L 77/00**, C 08 L 51/04,
C 08 L 53/02, C 08 L 55/02,
C 08 K 5/05, C 08 K 5/10,
C 08 K 5/20, C 08 K 5/34,
C 08 K 5/43

(54) **Polyamid-Formmassen.**

(30) Priorität: **13.02.81 DE 3105364**

(43) Veröffentlichungstag der Anmeldung:
**25.08.82 Patentblatt 82/34**

(45) Bekanntmachung des Hinweises auf die Patenterteilung:
**12.06.85 Patentblatt 85/24**

(84) Benannte Vertragsstaaten:
**DE FR GB IT**

(56) Entgegenhaltungen:
**EP - A - 0 001 245**
**US - A - 4 173 556**

**R. VIEWEG et al. "Kunststoff-Handbuch" Band VI**
**"Polyamide" 1966, CARL HANSER VERLAG, München**

(73) Patentinhaber: **BAYER AG, Konzernverwaltung RP**
**Patentabteilung, D-5090 Leverkusen 1 Bayerwerk (DE)**

(72) Erfinder: **Grigo, Ulrich, Dr., c/o Mobay Chemical**
**Corporation, New Martinsville, W.Va. 26155 (US)**
Erfinder: **Fahnler, Friedrich, Wimmersweg 60,**
**D-4150 Krefeld (DE)**
Erfinder: **Binsack, Rudolf, Dr., Bethelstrasse 4a,**
**D-4150 Krefeld (DE)**
Erfinder: **Morbitzer, Leo, Dr., Rungestrasse 50,**
**D-5000 Köln 80 (DE)**
Erfinder: **Lindner, Christian, Dr., Riehler Strasse 200,**
**D-5000 Köln 60 (DE)**

ACTORUM AG

## Beschreibung

Die Erfindung betrifft thermoplastische Formmassen aus Polyamiden, einem Pfropfprodukt auf Polydien-Basis und Weichmachern, die sich durch hohe Zähigkeit, ausgezeichnete Flexibilität, Wechselknickfestigkeit und dauerhafter Oberflächenbeschaffenheit auszeichnen.

Aus der DE-OS 2 742 176 ist bereits bekannt, die Schlag- und Kerbschlagzähigkeit von Polyamiden durch Zumischen von Pfropfpolymerisaten aus vernetzten Polybutadienen und aufgepfropften (Meth)-acrylsäureestereinheiten zu erhöhen. Diese Formmassen besitzen ein hohes Zähigkeitsniveau, sind jedoch für bestimmte Anwendungszwecke, z.B. Schuhsohlen und Schläuche nicht geeignet, da hierfür ihre elastischen Eigenschaften nicht immer ausreichen.

Es ist bekannt, dass diese Eigenschaften durch Zusatz von Weichmachern verbessert werden können. Die üblichen niedermolekularen Weichmacher diffundieren relativ rasch an die Oberfläche von Polyamidformkörpern, wodurch diese mit der Zeit verspröden und durch die Ablagerungen des Weichmachers ein unerwünschtes, unansehnliches Aussehen zeigen.

Gemäss der Lehre des US-PS 4 173 556 ist es sogar von Nachteil, thermoplastischen Legierungen aus vernetztem Kautschuk und Polyamiden niedermolekulare Weichmacher zuzusetzen, da dadurch die elastischen Eigenschaften verschlechtert werden.

Überraschenderweise wurde nun festgestellt, dass man nicht nur eine deutliche Verbesserung der elastischen Eigenschaften, insbesondere der reversiblen Dehnbarkeit und Wechselknickfestigkeit, erzielen kann, wenn man den mit den obengenannten Pfropfpolymerisaten modifizierten Polyamiden einen für Polyamide üblichen Weichmacher zusetzt, sondern dass sich der Glanz und die Oberflächenbeschaffenheit der entsprechenden Formkörper auch bei relativ längerer Lagerung nicht merklich ändert.

Gegenstand der vorliegenden Erfindung sind daher thermoplastische Formmassen bzw. daraus hergestellte Formkörper aus:

I. 30-94, vorzugsweise 50-90 Gew.-%, bezogen auf die Gesamtformmasse, wenigstens eines Polyamids,

II. 70-3, vorzugsweise 50-5 Gew.-%, bezogen auf die Gesamtformmasse, eines Pfropfproduktes hergestellt aus

    a) 50-95, vorzugsweise 70-90 Gew.-% eines vernetzten Polymerisats aus Butadien und/oder substituiertem Butadien, das gegebenenfalls bis zu 40 Gew.-% aus Styrol und/oder Acrylnitril aufgebaut sein kann, als Pfropfgrundlage und

    b) 5-50 Gew.-%, vorzugsweise 30-10, von Pfropfmonomeren aus

      $\alpha$) 3-100 Gew.-% eines Esters der (Meth)-Acrylsäure

      $\beta$) 0-80 Gew.-% Styrol und

      $\gamma$) 0-80 Gew.-% (Meth)Acrylnitril,

wobei der Gelanteil der Pfropfgrundlage $\geqslant$ 70%, vorzugsweise $\geqslant$ 80 Gew.-% in Toluol gemessen,

die Pfropfausbeute G $\geqslant$ 0,15, vorzugsweise $\geqslant$ 0,40, und der mittlere Teilchendurchmesser des Pfropfpolymerisats $\geqslant$ 0,1 $\mu$m, vorzugsweise 0,2-0,6 $\mu$m insbesondere ca. 0,3-0,5 $\mu$m betragen soll,

III. 20-3, vorzugsweise 15-5 Gew.-%, bezogen auf die Gesamtformmasse eines für Polyamid üblichen geeigneten Weichmachers, und gegebenenfalls weiteren, üblichen Zuschlagstoffen,

wobei die Summe aus I.-III. bzw. a) und b) bzw. $\alpha$)-$\gamma$) jeweils 100 Gew.-% ergeben muss.

Als Polyamide eignen sich alle thermoplastischen Polyamide, vorzugsweise teilkristalline Polyamide. So können als teilkristalline Polyamide für die erfindungsgemässen Formmassen Polyamid-6, Polyamid-6,6 und Copolymere aus diesen beiden Komponenten eingesetzt werden. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylhexamethylendiamin und/oder 2,4,4-Trimethylhexamethylendiamin und/oder Isophorondiamin besteht und deren Zusammensetzung aus dem Stand der Technik bekannt ist.

Ausserdem sind Polyamide zu nennen, die ganz oder teilweise aus Lactamen mit 7-12 C-Atomen, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6.

Die Polyamide sollen vorzugsweise eine relative Viskosität (gemessen an einer 1 gew.%igen Lösung in m-Kresol bei 25°C) von 2,0-5,0, besonders bevorzugt von 2,5-4,5 aufweisen.

Für die Herstellung der Pfropfprodukte werden als Pfropfgrundlage vernetzte Dienkautschuke aus Polybutadien und/oder Polyisopren, die bis zu 40 Gew.-% Styrol und/oder Acrylnitril als Co-Monomere enthalten können, verwendet. Der Gelanteil des als Pfropfgrundlage verwendeten Polymeren sollte $\geqslant$ 70 Gew.-%, vorzugsweise $\geqslant$ 80 Gew.-% (gemessen in Toluol) sein.

Die bevorzugte Pfropfgrundlage besteht aus vernetztem Polybutadien.

Pfropfmonomere im Sinne der Erfindung sind Acrylnitril, Styrol, Methacrylnitril, aliphatische Ester der Acrylsäure und Methacrylsäure mit bis zu 22 C-Atomen. Bevorzugte Pfropfmonomere sind Ester der Acrylsäure und Methacrylsäure. Von den Estern der Acrylsäure bzw. Methacrylsäure sind der Methyl-, der Ethyl-, der n-Butyl-, der tert.-Butyl-, der Octyl- und der Ethylhexylester besonders bevorzugt.

Die erfindungsgemässen Pfropfprodukte können nach allen bekannten Polymerisationsverfahren (Emulsions-, Lösungs-, Masse-, Suspensions-, Fällungspolymerisation), sowie nach Kombinationen aus diesen Verfahren hergestellt werden.

Zur Herstellung der Pfropfprodukte wird das aufzupfropfende Monomere in Gegenwart der vorgebildeten Pfropfgrundlage polymerisiert. Es bildet sich dabei neben dem eigentlichen Pfropfpolymerisat auch freies Homopolymerisat. Unter Pfropfprodukte wird die Summe der eigentlichen Pfropfcopolymerisate und der freien Polymerisate verstanden. Die Menge des aufgepfropften Monomeren und sein Molekulargewicht kann in weiten Grenzen durch Variation der Polymerisationsbedingungen beeinflusst werden. Hierzu gehören vor allem: Art des Polymerisationsverfahrens, Temperatur, Kativatorsystem, Molekulargewichtsregler, Rührbedingungen und Art der Monomer-Dosierung. Erfindungsgemäss sollte die Pfropfausbeute $G \geqslant 0,15$, vorzugsweise $G \geqslant 0,40$ betragen. Die Pfropfausbeute G bezeichnet das Mengenverhältnis von aufgepfropftem Monomer zur Gesamtmenge der Monomeren in der Pfropfauflage und ist dimensionslos.

Bevorzugte Polymerisationsverfahren für die erfindungsgemässen Pfropfpolymeren ist die Emulsionspolymerisation.

Für die Herstellung der Pfropfprodukte durch Emulsionspolymerisation werden vernetzte, vorzugsweise durch Emulsionspolymerisation gewonnene Butadienpolymerisate als Pfropfgrundlagen bevorzugt. Erfindungsgemäss werden bevorzugt solche Pfropfprodukte, die einen «mittleren Teilchendurchmesser» $d_{50}$ von 0,2-0,6 μm, vorzugsweise 0,3-0,5 μm, insbesondere ca. 0,4 μm aufweisen verwendet. [Zur Bestimmung vgl. W. Scholtan und H. Lange, Kolloid-Z. und Z. Polymere 250 (1972) 782-796 bzw. G. Kämpf, H. Schuster, Angew. Markomolekulare Chemie 14 (1970), S. 111-129.]

Statt nur einer Pfropfgrundlage können auch Abmischungen verschiedener Pfropfgrundlagen zur Herstellung der Pfropfprodukte eingesetzt werden. Weiterhin können statt nur eines Pfropfproduktes auch Abmischungen mehrerer erfindungsgemässer Pfropfprodukte mit unterschiedlichem Aufbau zur Abmischung mit den Polyamiden herangezogen werden.

Zur Herstellung der erfindungsgemässen Formmassen werden ganz besonders bevorzugt Pfropfprodukte hergestellt aus

a) 70-95 Gew.-%, vorzugsweise 75-90 Gew.-% eines vernetzten Polymerisates aus Butadien und/oder substituiertem Butadien, das zumindest aus 95 Gew.-% gegebenenfalls substituierten Butadien-Einheiten aufgebaut ist, als Pfropfgrundlage und

b) 5-30 Gew.-%, vorzugsweise 10-25 Gew.-% von Methylmethacrylat als aufzupfropfendes Monomeres, wobei der Gelanteil der Pfropfgrundlage > 70%, vorzugsweise > 80 Gew.-%, in Toluol gemessen, die Pfropfausbeute $G \geqslant 0,15$, vorzugsweise $\geqslant 0,40$ und der mittlere Teilchendurchmesser des Pfropfcopolymerisats 0,2 - 0,6, vorzugsweise 0,3 - 0,5, insbesondere ca. 0,4 μm betragen soll,

verwendet.

Als Weichmacher sind die für Polyamide üblichen, bekannten, vorzugsweise niedermolekulare Verbindungen geeignet. Insbesondere sind dies alle Substanzen, die in der Lage sind, die Einfriertemperatur der Polyamide abzusenken, ohne die chemische Natur der Polyamid-Makromoleküle zu verändern. Hierzu gehören folgende Substanzklassen bzw. Substanzen: Aromatische Hydroxyverbindungen, wie z.B.: p-Oxybenzoesäure-2-ethylhexylester, Dioxybenzoesäureester, Phenole, aromatische Hydroxyaldehyde; aromatische Sulfonamide, wie z.B.: Benzolsulfonsäure-N-monomethylamid, Benzolsulfonsäure-N-butylamid, Toluolsulfonsäureamid, Toluolsulfonsäureethylamid, N-Cyclohexyl-p-toluolsulfonamid; Phthalsäureester, wie z.B.: Di-isopropylphthalat, Di-tert.-butylphthalat, Di-2-ethylhexylphthalat, Di-isononylphthalat, Di-isononyl-poly-tri-ethylenglykol-phthalat; Lactame, wie z.B. ε-Caprolactam, Laurinlactam; Lactone, Umsetzungsprodukte aus Hydroxycarbonsäuren und Alkylenoxyden, Acrylcyclohexanol, Abietylalkohol, Tetrahydrofurfurylalkohol-Carbonsäureester, Pentantriol und seine Ester.

Geeignete Weichmacher im Sinne der Erfindung sind auch Alkylsulfonsäureester, die aus Alkylsulfochloriden, die 1-4, vorzugsweise 1-2, über die Kohlenwasserstoffkette statistisch oder regelmässig verteilte -$SO_2$-Cl-Gruppen enthalten, und Phenolen hergestellt werden.

Geeignete Phenole sind Monophenole, wie z.B. Phenyl-, Diphenyl- und Naphthyl-Derivate sowie Bisphenole wie Hydrochinon, Resorcin, Dihydroxydiphenyl, Bis(hydroxyphenyl)-alkane, Bis(hydroxyphenyl)-cycloalkane, Bis(hydroxyphenyl)-sulfide, Bis(hydroxyphenyl)-ether, Bis(hydroxyphenyl)-sulfonide, Bis(hydroxyphenyl)-sulfon.

Beispiele für geeignete Alkylsulfonsäureester sind
($C_{12}$-$C_{18}$)-Alkylsulfonsäure-p-phenylester
($C_{12}$-$C_{18}$)-Alkyldi(sulfonsäure-p-phenylester)
($C_{12}$-$C_{18}$)-Alkylsulfonsäure-p-phenyl-octyl-ester
($C_{12}$-$C_{18}$)-Alkylsulfonsäure-p-hydroxybenzoesäure-
-iso-butylester
2,2-Bis[($C_{12}$-$C_{18}$)-alkylsulfonsäure-4-phenylester]-
propan
2,2-Bis-[($C_{12}$-$C_{18}$)-alkylsulfonsäure-3,5-dichlor-4-
-phenylester]propan.

Den erfindungsgemässen Formmassen werden als Weichmacher bevorzugt aromatische Sulfonamide und Lactame zugesetzt.

Die Herstellung der erfindungsgemässen Polyamid-Formmassen kann in den üblichen Mischaggregaten wie Walzen, Kneter-, Ein- und Mehrwellenextruder bei üblichen Bedingungen erfolgen. Besonders geeignet sind Doppelwellenextruder.

Die Formmassen können auf den genannten Mischaggregaten hergestellt werden, indem die drei Komponenten I, II und III gemeinsam aufgeschmolzen und homogenisiert werden oder indem das Pfropfprodukt II in die Schmelze des Weichmacher (III)-haltigen Polyamids I oder indem die Weichmacher III in die aufgeschmolzene Mischung aus Polyamid I und Pfropfprodukt II eingearbeitet werden.

Die erfindungsgemässen Formmassen können übliche Additive, wie Gleit- und Entformungsmittel Nucleierungsmittel, Stabilisatoren, Flammschutzmittel sowie Farbstoffe, enthalten. Die Zusatzstoffe werden vorzugsweise bei der Compoundierung in reiner Form oder als Konzentrate zugesetzt.

Die erfindungsgemässen Formmassen eignen sich aufgrund ihrer hervorragenden elastischen Eigenschaften besonders zur Herstellung von Schuhsohlen, Dichtungen oder Schläuchen.

*Beispiele*

*Herstellung des Pfropfproduktes*

In einem druckfesten Rührgefäss wird eine Lösung aus 80 Gew.-Teilen salzfreiem Wasser, 1,5 Gew.-Teilen Natriumsalz der disproportionierten Abietinsäure und 0,3 Gew.-Teilen Kaliumperoxidisulfat vorgelegt. Nach Verdrängen der Luft durch Stickstoff und Einstellung der Innentemperatur auf 55°C werden 0,35 Gew.-Teile Dodecylmercaptan und X Gew.-Teile Butadien zugesetzt und polymerisiert. Mit absinkender Reaktionsgeschwindigkeit bei fortschreitender Polymerisation wird die Temperatur langsam auf 68°C angehoben.

Nach beendeter Polymerisation werden geringe Mengen des nicht umgesetzten Butadiens durch Ausrühren des erhaltenen Latex unter vermindertem Druck entfernt.

175 Gew.-Teile entsalztes Wasser und 0,3 Gew.-Teile Kaliumperoxidsulfat werden zugesetzt.

Nach Verdrängen der Luft durch Stickstoff und Erwärmen auf 65°C werden 2 Gew.-Teile Emulgator (Na-Salz der disproportionierten Abietinsäure oder Alkylsulfonate), gelöst in 25 Gew.-Teilen Wasser sowie Y Gew.-Teile der in Tabelle 1 angegebenen Monomeren zugesetzt.

Die Zulaufdauer beträgt ca. 4 Stunden. Zur Vervollständigung der Reaktion wird nach beendetem Zulauf noch 2 Stunden bei 65°C weiter gerührt.

Der so erhaltenbe Pfropfprodukt-Latex wird nach Zusatz von 1 Gew.-Teil eines phenolischen Antioxidans (2,6-Di-tert.-butyl-p-kresol) mit 2%iger MgSO$_4$/Essigsäure-Lösung (Mischungsverhältnis 1 : 1 Gew.-Teile) koaguliert, das Koagulat abgetrennt, salzfrei gewaschen und bei 70°C im Vakuum getrocknet.

Die Zusammensetzung der Pfropfprodukte ist der Tabelle 1 zu entnehmen.

Tabelle 1

Zusammensetzung der Pfropfprodukte

| Typ | X Gew.-Teile Butadien | Y Gew.-Teile Pfropf-monomeres | mittlerer Teilchen-durchmesser $\mu$m |
|-----|------|------|------|
| A | 80 | 20 n-BA/t-BA (8 : 2) | 0,4 |
| B | 80 | 20 S/AN (72/78) | 0,4 |

Tabelle 1 (Fortsetzung)

| Typ | X Gew.-Teile Butadien | Y Gew.-Teile Pfropf-monomeres | mittlerer Teilchen-durchmesser $\mu$m |
|-----|------|------|------|
| C | 80 | 20 MMA | 0,4 |
| D | 60 | 40 MMA | 0,4 |

n-BA = n-Butylacrylat
t-BA = tert.-Butylacrylat
S = Styrol
AN = Acrylnitril
MMA = Methylmethacrylat

*Beispiele 1 - 19*

*Herstellung der Formmassen*

Die Einarbeitung der Pfropfprodukte A bis D in Polyamid erfolgt in einem handelsüblichen, kontinuierlich arbeitenden Doppelwellenextruder ZSK 32 der Fa. Werner & Pfleiderer, in der das Polyamid bei Temperaturen von 270-290°C aufgeschmolzen wurde.

Durch einen zweiten Einfüllstutzen wurde das Pfropfprodukt in die Polyamid-Schmelze eindosiert. Stickstoffbeschleierung ist zweckmässig. Das Pfropfprodukt verteilt sich homogen im aufgeschmolzenen Polyamid. Über eine gesonderte Zuleitung wurde der Weichmacher mit Hilfe einer Dosierpumpe in die homogenisierte Schmelze von Polyamid und Pfropfpolymerisat eindosiert. Es kann vorteilhaft sein, die Schmelze vor dem Austritt aus der Düse zu entgasen. Die Zylindertemperaturen wurden so eingestellt, dass eine Massetemperatur von 270 bis 290°C gewährleistet war. Der Schmelzestrang der Mischung aus Polyamid, Pfropfprodukt und Weichmacher wurde in Wasser abgekühlt, granuliert und getrocknet. An diesem Granulat wurde die Weichermacher-Migration durch Gewichtsverluste nach Wasserlagerung (24 h bei 60°C) ermittelt. Die entsprechenden Werte sind der Tabelle 3 zu entnehmen. Vom Granulat wurden ausserdem auf einer üblichen Spritzgussmaschine bei 260°C Normkleinstäbe (nach DIN 53 453), Flachstäbe (nach DIN 53 453) und Zugstäbe (nach DIN 53 455) verspritzt.

Geprüft wurde an den Normkleinstäben die Kerbschlagzähigkeit bei 25°C (nach DIN 53 453), an den Flachstäben die Wechselknickfestigkeit (in Anlehnung an DIN 53 359) und an den Zugstäben die relative reversible Dehnung (nach DIN 53 455).

Die Zusammensetzung und die Eigenschaften der Formmassen sind der Tabelle 2 zu entnehmen.

Tabelle 2

| Bei-spiel | Pfropfprodukt Typ | Gew.-% | Polyamid Typ | $\eta$ rel[1] | Gew.-% | Weichmacher Typ | Gew.-% | rel. rev. Deh-nung | Wechsel-knickfestig-keit (Zahl der Hübe) | Kerbschlag-zähigkeit (23°C, kJ/m²) |
|---|---|---|---|---|---|---|---|---|---|---|
| 1 | A | 30 | PA-6 | 3,95 | 60 | I | 10 | 26 | 42.000 | 42 |
| 2 | B | 30 | PA-6 | 3,95 | 60 | I | 10 | 25 | 35.000 | 23 |
| 3 | C | 30 | PA-6 | 3,95 | 60 | I | 10 | 35 | 62.000 | 48 |
| 4 | D | 30 | PA-6 | 3,95 | 60 | I | 10 | 32 | 48.000 | 26 |
| 5*) | A | 40 | PA-6 | 3,95 | 60 | - | 0 | 18 | 7.000 | 47 |
| 6*) | B | 40 | PA-6 | 3,95 | 60 | - | 0 | 17 | 4.000 | 25 |
| 7*) | C | 40 | PA-6 | 3,95 | 60 | - | 0 | 20 | 8.000 | 53 |
| 8*) | D | 40 | PA-6 | 3,95 | 60 | - | 0 | 19 | 7.500 | 28 |
| 9 | C | 10 | PA-6 | 3,95 | 80 | I | 10 | 23 | 36.000 | 29 |
| 10*) | C | 20 | PA-6 | 3,95 | 80 | - | 0 | 16 | 3.500 | 51 |
| 11*) | C | 10 | PA-6 | 3,95 | 90 | - | 0 | 15 | 2.000 | 9 |
| 12 | C | 40 | PA-6 | 3,95 | 50 | I | 10 | 41 | 95.000 | 43 |
| 13*) | C | 50 | PA-6 | 3,95 | 50 | - | 0 | 22 | 8.000 | 47 |
| 14 | C | 30 | PA-6 | 3,95 | 60 | II | 10 | 36 | 76.000 | 49 |
| 15 | C | 20 | PA-66 | 3,05 | 62,5 | I | 12,5 | 33 | 53.000 | 36 |
| 16*) | C | 32,5 | PA-66 | 3,05 | 67,5 | - | 0 | 15 | 2.500 | 41 |

1)    gemessen in m-Kresol bei 23°C
I  =  Benzolsulfonsäure-N-monomethylamid
*)   Vergleichsbeispiel
II  =  Benzolsulfonsäure-N-butylamid

Tabelle 3

Versuche zur Weichmacher-Migration

| Bei-spiel | Pfropfprodukt Typ | Gew.-% | Polyamid Typ | $\eta$ rel | Gew.-% | Weichmacher Typ | Gew.-% | migrierter nach 5 Tagen/Gew.-% | Weichmacher-anteil nach 10 Tagen/Gew.-% |
|---|---|---|---|---|---|---|---|---|---|
| 17*) | - | - | PA-6 | 3,95 | 90 | I | 10 | 2,8 | 3,1 |
| 18*) | - | - | PA-6 | 3,95 | 90 | II | 10 | 1,6 | 1,9 |
| 12 | C | 40 | PA-6 | 3,95 | 50 | I | 10 | 1,6 | 1,95 |
| 3 | C | 30 | PA-6 | 3,95 | 60 | I | 10 | 1,8 | 2,1 |
| 19 | C | 40 | PA-6 | 3,95 | 50 | II | 10 | 0,57 | 0,95 |

**Patentansprüche**

1. Thermoplastische Formmassen aus

I. 30-94 Gew.-% wenigstens eines Polyamids,

II. 70-3 Gew.-% eines Pfropfproduktes hergestellt aus

a) 50-95 Gew.-% eines vernetzten Polymerisats aus Butadien und/oder subst. Butadien, das gegebenenfalls bis zu 40 Gew.-% aus Styrol und/oder Acrylnitril aufgebaut sein kann, als Pfropfgrundlage und

b) 5-50 Gew.-% von Pfropfmonomeren aus

$\alpha$) 3-100 Gew.-% eines Esters der (Meth)-Acrylsäure

$\beta$) 0-80 Gew.-% Styrol und

$\gamma$) 0-80 Gew.-% (Meth)Acrylnitril,

wobei der Gelanteil der Pfropfgrundlage $\geq$ 70% in Toluol gemessen, die Pfropfausbeute G $\geq$ 0,15 und der mittlere Teilchendurchmesser des Pfropfcopolymerisats $\geq$ 0,1 $\mu$m betragen soll,

III. 20-3 Gew.-% eines für Polyamid üblichen Weichmachers und gegenebenenfalls weiteren, üblichen Zuschlagstoffen,

wobei die Summe I.-III. bzw. a) und b) bzw. α) - γ) jeweils 100 Gew.-% ergeben muss.

2. Formmassen nach Anspruch 1, enthaltend 50 bis 90 Gew.-% der Komponente I, 50-5 Gew.-% der Komponente II und 15-5 Gew.-% der Komponente III.

3. Formmassen nach Anspruch 1 oder 2, dadurch gekennzeichnet, dass die Komponente II aus 70-90 Gew.-% der Komponente a) und 30-10 Gew.-% der Komponente b) hergestellt wurde.

4. Formmassen nach Ansprüchen 1-3, dadurch gekennzeichnet, dass die Komponente a) ein vernetztes Polybutadien ist und die Komponente b) aus dem Methyl-, Ethyl-, n-Butyl-, tert.-Butyl-, Octyl- oder Ethylhexylester der (Meth)acrylsäure aufgebaut ist.

5. Formmassen nach Ansprüchen 1-4, dadurch gekennzeichnet, dass der Gelanteil der Pfropfgrundlage ≥ 80 Gew.-%, die Pfropfausbeute G ≥ 0,40 und der mittlere Teilchendurchmesser des Pfropfpolymerisats 0,2-0,6 μm betragen soll.

6. Formmassen nach Ansprüchen 1-4, dadurch gekennzeichnet, dass als Weichmacher aromatische Hydroxyverbindungen, aromatische Sulfonamide, Phthalsäureester, Lactame, Lactone oder Alkylsulfonsäureester verwendet werden.

7. Formkörper hergestellt aus Formmassen nach Ansprüchen 1-5.

## Claims

1. Thermoplastic moulding compositions comprising

I. 30-94% by weight of at least one polyamide,

II. 70-3% by weight of a graft product prepared from

    a) 50-95% by weight of a cross-linked polymer of butadiene and/or subst. butadiene, which can optionally be composed to an extent of up to 40% by weight of styrene and/or acrylonitrile, as the graft substrate, and

    b) 5-50% by weight of graft monomers of

    α) 3-100 by weight of an ester of (meth)acrylic acid,
    β) 0-80% by weight of styrene and
    γ) 0-80% by weight of (meth)acrylonitrile,

    wherein the gel content of the graft substrate should be ≥ 70%, measured in toluene, the graft yield should be G ≥ 0.15 and the average particle diameter of the graft copolymer should be ≥ 0.1 μm,

III. 20-3% by weight of a plasticiser customary for polyamide and optionally other customary additives,

    the sum of I.-III. and of a) and b) and of, α) - γ) having in each case to equal 100% by weight.

2. Moulding composition according to claim 1, containing 50-90% by weight of component I, 50-5% by weight of component II and 15-5% by weight of component III.

3. Moulding composition according to claim 1 or 2, characterised in that component II has been prepared from 70-90% by weight of component a) and 30-10% by weight of component b).

4. Moulding composition according to claims 1-3, characterised in that component a) is a cross-linked polybutadiene and component b) is composed of the methyl, ethyl, n-butyl, tert.-butyl, octyl or ethylhexyl ester of (meth)acrylic acid.

5. Moulding composition according to claims 1-4, characterised in that the gel content of the graft substrate should be ≥ 80% by weight, the graft yield should be G ≥ 0.40 and the average particle size of the graft polymer should be 0.2-0.6 μm.

6. Moulding composition according to claims 1-4, characterised in that aromatic hydroxyl compounds, aromatic sulphonamides, phthalic acid esters, lactams, lactones or alkylsulphonic acid esters are used as the plasticisers.

7. Mouldings produced from moulding compositions according to claims 1-5.

## Revendications

1. Matières à mouler thermoplastiques comprenant

I. 30-94% en poids d'au moins un polyamide,

II. 70-3% en poids d'un produit de greffage préparé à partir de

    a) 50-95% en poids d'un polymère réticulé de butadiène et/ou de butadiène substitué qui peut être formé, le cas échéant jusqu'à 40% en poids, de styrène et/ou d'acrylonitrile, comme substrat de greffage et

    b) 5-50% en poids de monomères à greffer formés de

    α) 3-100% en poids d'un ester d'acide (méth)-acrylique,
    β) 0-80% en poids de styrène et
    γ) 0-80% en poids de (méth)acrylonitrile,

    la proportion de gel du substrat de greffage devant avoir une valeur supérieure ou égale à 70%, mesurée dans le toluène, le rendement de greffage G devant avoir une valeur supérieure ou égale à 0,15 et le diamètre moyen des particules du copolymère greffé devant avoir une valeur supérieure ou égale à 0,1 μm,

III. 20-3% en poids d'un plastifiant classique pour polyamide et, le cas échéant, d'autres additifs classiques,

    chacune des sommes de I. à III. et de a) et b) et α) à γ) devant être égale à 100%.

2. Matières à mouler suivant la revendication 1, contenant 50 à 90% en poids de composant I, 50 à 5% en poids de composant II et 15 à 5% en poids de composant III.

3. Matières à mouler suivant la revendication 1 ou 2, caractérisées en ce que le composant II a été obtenu à partir de 70 à 90% en poids du composant a) et de 30 à 10% en poids du composant b).

4. Matières à mouler suivant les revendications 1 à 3, caractérisées en ce que le composant a) est un polybutadiène réticulé et le composant b) est formé de l'ester de méthyle, d'éthyle, de n-butyle, de tertio-butyle, d'octyle ou d'éthylhexyle de l'acide (méth)-acrylique.

5. Matières à mouler suivant les revendications 1 à 4, caractérisées en ce que la proportion de gel du substrat de greffage doit être supérieure ou égale à 80% en poids, le rendement de greffage G doit être supérieur ou égal à 0,40 et le diamètre moyen des particules du polymère greffé doit aller de 0,2 à 0,6 µm.

6. Matières à mouler suivant les revendications 1 à 4, caractérisées en ce qu'on utilise comme plastifiants des composés hydxroxyliques aromatiques, des sulfamides aromatiques, des esters de l'acide phtalique, des lactames, des lactones ou des esters alkyliques d'acide sulfonique.

7. Pièces moulées produites à partir de mélanges à mouler suivant les revendications 1-5.